# EUROPEAN PATENT SPECIFICATION

(11) **EP 4 621 262 B1**
(45) Date of publication and mention of the grant of the patent: **18.11.2026**
(21) Application number: 24749583.1
(22) Date of filing: 24.01.2024
(51) Int. Cl.: F16H 25/20, F16H 25/24, F16H 57/04, H02K 7/06

(54) **LINEAR ACTUATOR HAVING QUICK RELEASE FUNCTION**
LINEARSTELLGLIED MIT SCHNELLLÖSEFUNKTION
ACTIONNEUR LINÉAIRE AYANT UNE FONCTION DE LIBÉRATION RAPIDE

(30) Priority: 01.02.2023 CN 202320196229 U
(43) Date of publication of application: 24.09.2025
(73) Proprietor: Zhejiang Jiecang Linear Motion Technology Co., Ltd, Shaoxing, Zhejiang 312500 (CN)
(72) Inventor: SHI, Danjie, Shaoxing, Zhejiang 312500 (CN)
(74) Representative: karo IP
(86) International application number: PCT/CN2024/073791
(87) International publication number: WO 2024/160102

(56) References cited:
- WO-A1-03/033946
- WO-A1-2019/091997
- CN-A- 111 577 850
- CN-A- 112 096 819
- CN-A- 113 513 566
- CN-U- 219 549 516
- DE-A1- 102005 062 999
- DE-U1- 202018 100 747
- US-A1- 2014 260 730

## Description

### FIELD

The subject matter described herein relates to linear transmission, and more particularly relates to a quick-releasing linear actuator.

### BACKGROUND

A linear actuator, also referred to as an electric pushrod, is widely applied in areas including furniture, medical equipment, and solar power generation. The linear actuator mainly comprises an electric motor, a driving worm, a worm wheel, a threaded shaft, and a nut, an operating principle of which goes like this: the electric motor actuates the driving worm to rotate, the driving worm then drives the worm wheel meshing therewith to rotate, the rotating worm wheel drives the threaded shaft to rotate, the rotating threaded shaft drives the nut to move axially, and the nut, which is usually connected to an inner tube, drives the inner tube to extend or retract.

In consideration of application scenarios of the linear actuator, a clutch member would be additionally provided mainly for disconnecting power transmission between the electric motor and the threaded shaft in circumstances such as motor failure, power interruption, or other circumstances that require disconnecting power transmission; the clutch member allows for manually actuating the threaded shaft to rotate to thereby implement reverse pushing.

In conventional technologies, a control cable is employed to actuate a guide lever to drive, via a shift fork, the clutch member to disconnect power transmission between the worm wheel and the threaded shaft; to achieve this, it is needed to push the clutch member, which is disposed between the worm wheel and the tail of the linear actuator, to move towards the tail of the linear actuator. Since the control cable is pulled in a direction towards the head of the linear actuator, which is contrary to the movement direction of the clutch member upon quick releasing, a rotating member needs to be further provided to curve the motion trajectory of a shift lever actuating the clutch member so as to change the direction of force. However, that solution leads to a complex engagement/disengagement control structure and thusly a higher failure probability.

WO 2019/091997 A1 describes an electromotive furniture drive with a dog clutch.

### SUMMARY

A quick-releasing linear actuator described herein offers a simplified structure and a higher reliability. This is proposed by the quick-releasing linear actuator according to Claim 1, wherein the dependent claims refer to embodiments and implementations thereof.

This invention is implemented by a technical solution set forth below:
a quick-releasing linear actuator, comprising:
a housing; an electric motor;
a transmission assembly operable to transmit a motor torque;
a threaded shaft driven by the motor torque to rotate;
a drive nut thread-fitted on the threaded shaft and driven by rotation of the threaded shaft to move axially along the threaded shaft;
a clutch member disposed on the threaded shaft between the transmission assembly and the drive nut, the clutch member rotating synchronously with the threaded shaft and sliding axially along the threaded shaft;
and a release assembly comprising a release bar and a shift lever, the release bar driving the shift lever to be displaced axially along the threaded shaft in a linear, reciprocal manner, the clutch member being driven by linear, reciprocal displacement of the shift lever so as to be engaged with or disengaged from the transmission assembly, the linear actuator further comprising a damper that produces a damping force against the clutch member when the clutch member is disengaged from the transmission assembly, the damper being disposed in the housing.

In the quick-releasing linear actuator set forth above, the damper is elastically deformable under compression.

In the quick-releasing linear actuator set forth above, the damper is disposed on the housing, the damper engaging the clutch member to produce a rotation damping force; or, the damper is disposed on the clutch member, the damper engaging the housing to produce a rotation damping force; or, the damper comprises a first damping piece disposed on the clutch member and a second damping piece disposed on the housing, the first damping piece engaging the second damping piece to produce a rotation damping force.

In the quick-releasing linear actuator set forth above, the release assembly further comprises a limiter configured to limit a release travel of the release bar, the damper producing the damping force against the clutch member within the release travel of the release bar.

In the quick-releasing linear actuator set forth above, the release bar comprises a bar body and a guiding slider attached on the bar body, and a guiding groove is provided on the housing, the guiding slider being slidingly fitted in the guiding groove, the limiter stopping the bar body or the guiding slider to thereby limit the release travel of the release bar.

In the quick-releasing linear actuator set forth above, the clutch member and the threaded shaft are connected via a spline.

In the quick-releasing linear actuator set forth above, an annular groove extending circumferentially is arranged on a circumferential wall of the clutch member, the shift lever projecting in the annular groove, the clutch member rotating about an axis of the threaded shaft relative to the shift lever.

In the quick-releasing linear actuator set forth above, a self-lubricating piece is arranged between an inner sidewall of the annular groove and an end portion of the shift lever.

In the quick-releasing linear actuator set forth above, the transmission assembly comprises a worm wheel and a worm meshing with each other for transmission, one of the clutch member and the worm wheel being provided with a drive protrusion, the other one being provided with a drive slot, the linear, reciprocal displacement of the shift lever driving the drive protrusion to enter or exit the drive slot to induce engagement or disengagement.

Compared with conventional technologies, this invention offers the following benefits:
By controlling the clutch member to slide axially along the threaded shaft, engagement/disengagement between the clutch member and the transmission assembly is implemented, which enables quick disconnection between the transmission assembly and the threaded shaft, so that the threaded shaft is free of the self-locking force of the transmission assembly and can rotate freely, whereby quick release of the linear actuator is achieved. The release assembly controlling engagement/disengagement of the clutch member comprises a release bar and a shift lever, the release bar driving the shift lever to be displaced linearly and reciprocally in the axial direction of the threaded shaft, the displacement direction being consistent with the displacement direction of the clutch member on the threaded shaft when being engaged/disengaged, which eliminates a direction-changing component in a conventional structure, thusly simplifying the structure of the release assembly and effectively reducing manufacturing costs; in addition, due to elimination of the direction-changing component, the release assembly has an improved reliability and a lower failure probability.

The linear actuator further comprises a damper that produces a damping force against the clutch member when the clutch member is disengaged from the transmission assembly; and the linear actuator further comprises a housing, the damper being disposed in the housing. When the clutch member disconnects power transmission with the transmission assembly, the damper produces a damping force that is transmitted to the threaded shaft, which prevents the threaded shaft from rotating excessively quickly and prevents the linear actuator from being retracted at an excessively high speed.

In a further solution, the damper is elastically deformable under compression. The damper, once being compressed, starts generating a damping force; the resulting elastic deformation may ensure that the damper produces a continuous, stable damping force.

In a further solution, the damper is disposed on the housing, the damper engaging the clutch member to produce a rotation damping force; or, the damper is disposed on the clutch member, the damper engaging the housing to produce a rotation damping force; or, the damper comprises a first damping piece disposed on the clutch member and a second damping piece disposed on the housing, the first damping piece engaging the second damping piece to produce a rotation damping force. By disposing the damper at different positions, a damping force can be generated between the damper and the clutch member, or between the damper and the housing, or between the two damping pieces.

In a further solution, the release assembly further comprises a limiter configured to limit a release travel of the release bar, the damper producing the damping force against the clutch member within the release travel of the release bar. By setting the limiter to limit the release travel of the release bar, the damper will exert a damping role within the release travel of the release bar; once the damper produces the damping force, no matter how great the force applied by the user is, the damping force as produced is still constant, thereby realizing retraction of the linear actuator at a uniform speed.

In a further solution, the release bar comprises a bar body and a guiding slider attached on the bar body, and a guiding groove is provided on the housing, the guiding slider being slidingly fitted in the guiding groove, the limiter stopping the bar body or the guiding slider to thereby limit the release travel of the release bar. The bar body of the release bar is configured mainly to connect a component such as the shift lever, while fitting between the guiding slider and the guiding groove serves to limit the sliding trajectory of the release bar, which ensures that the release bar can move linearly and reciprocally along the axis of the threaded shaft; and the limiter may be disposed on the bar body or the slider to limit the travel of the release bar.

In a further solution, the clutch member and the threaded shaft are connected via a spline. The spline offers a highly reliable connection; by limiting the sliding trajectory of the clutch member via fitting between the spline and a spline groove, it ensures that the clutch member can only move axially along the threaded shaft.

In a further solution, an annular groove extending circumferentially is arranged on a circumferential wall of the clutch member, the shift lever projecting in the annular groove, the clutch member rotating about an axis of the threaded shaft relative to the shift lever. The shift lever may interact with the sidewall of the annular groove to control sliding of the clutch member; in addition, since the annular groove is disposed extending circumferentially on the circumferential wall of the clutch member, the shift lever does not interfere with rotation of the clutch member.

In a further solution, a self-lubricating piece is arranged between an inner sidewall of the annular groove and an end portion of the shift lever. The self-lubricating piece reduces friction between a plunger and the inner sidewall of the annular groove on the clutch member and the noise arising therefrom.

In a further solution, the transmission assembly comprises a worm wheel and a worm meshing with each other for transmission, one of the clutch member and the worm wheel being provided with a drive protrusion, the other one being provided with a drive slot, the linear, reciprocal displacement of the shift lever driving the drive protrusion to enter or exit the drive slot to induce engagement or disengagement. The transmission assembly comprising the worm wheel and the worm can perform power transmission effectively as well as changing the power transmission direction, which facilitates adjusting the position of the drive motor; in addition, the power transmission between the clutch member and the worm wheel via fitting between the drive protrusion and the drive slot offers a high transmission efficiency and can implement quick engagement/disengagement between the clutch member and the worm wheel when the clutch member move axially along the threaded shaft.

### BRIEF DESCRIPTION OF THE DRAWINGS

Fig. 1 is a sectional view of a quick-releasing linear actuator when a clutch member is in an engaged state according this invention;
Fig. 2 is a sectional view of the quick-releasing linear actuator when the clutch member is in a disengaged state according this invention;
Fig. 3 is an exploded view of connection between a transmission assembly and the clutch member of the quick-releasing linear actuator when the clutch member is in the disengaged state;
Fig. 4 is a front view of connection between the transmission assembly and the clutch member of the quick-releasing linear actuator when the clutch member is in the disengaged state.

Reference Numerals:
100- housing; 110 - damper;
200- electric motor;
300 - worm wheel
400- threaded shaft; 410 - spline;
500- drive nut;
600 - inner tube;
700 - outer tube;
810- clutch member; 811 - annular groove; 820 - shift lever; 821 - plunger; 822- self-lubricating piece; 830- elastic return member; 840- control cable; 850 - bar body; 860- guiding slider; 870 - blocker; 880 - limiter

### DETAILED DESCRIPTION OF EMBODIMENTS

Hereinafter, the implementations of this invention will be described in detail. Example implementations are illustrated in the drawings. The implementations described *infra* with reference to the accompanying drawings are exemplary, intended for explaining this invention, not for limiting this invention.

In the description of the invention, it would be understood that the orientational or positional relationships indicated by the terms "center," "longitudinal," "transverse," "length," "width," "thickness", "upper," "lower," "front," "rear," "left," "right," "vertical," "horizontal," "top," "bottom," "inner," "outer," etc. are orientational and positional relationships based on the drawings, which are intended only for facilitating description of the invention and simplifying relevant illustrations, not for indicating or implying that the devices or elements compulsorily possess those specific orientations and are compulsorily configured and operated with those specific orientations; therefore, such terms should not be construed as limitations to the invention.

Besides, the terms "first" and "second" are only used for descriptive purposes, which shall not be construed as indicating or implying relative importance or implicitly indicating the amount of a referred to technical feature. Therefore, the features limited by "first" and "second" may explicitly or implicitly include one or more of such features. In the description of the invention, unless otherwise indicated, "plurality" indicates two, three or more.

In the invention, unless otherwise explicitly provided and limited, the terms such as "mount," "connect," "couple," and "fix" should be understood broadly, which, for example, may refer to a fixed connection, a detachable connection, or an integral connection; which may be a mechanical connection, an electrical connection, or communication; which may be a direct connection or an indirect connection via an intermediate medium; which may also be a communication between the insides of two elements. To a person of normal skill in the art, specific meanings of the above terms in the invention may be construed based on specific situations.

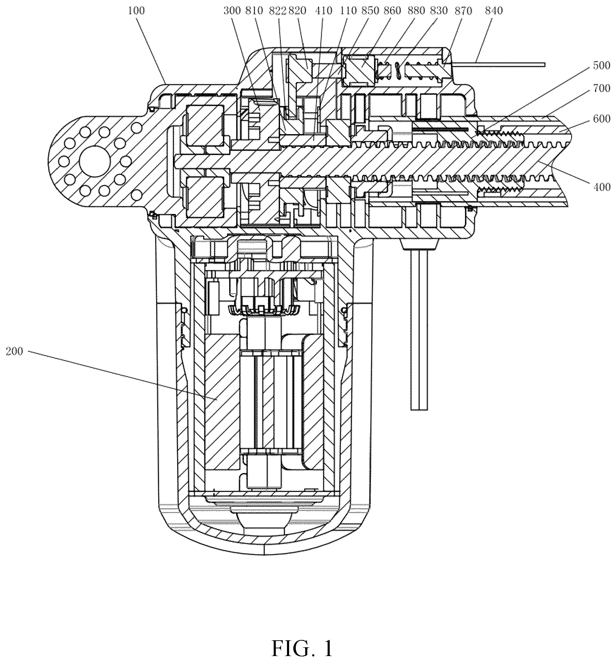

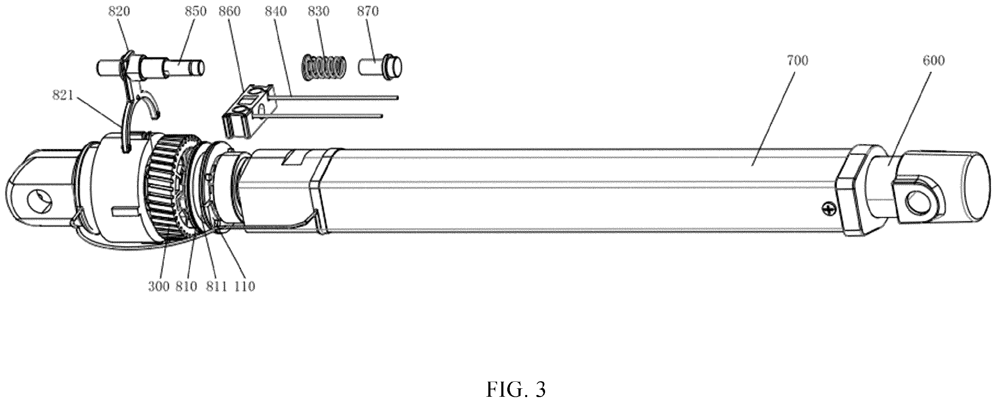

Figs. 1-4 illustrates an implementation of a quick-releasing linear actuator according to this invention, comprising: a housing 100, an electric motor 200, a transmission assembly, a threaded shaft 400, and a drive nut 500; the transmission assembly comprises a worm wheel 300 and a worm, the worm being connected to the electric motor 200, the worm wheel 300 being rotatably connected on the threaded shaft 400, i.e., the worm wheel 300 being sleeved on the threaded shaft 400 in a manner of not rotating with the threaded shaft 400. A clutch member 810 is arranged between the worm wheel 300 and the threaded shaft 400, the clutch member 810 being operable to engage/disengage power transmission between the worm wheel 300 and the threaded shaft 400; when the clutch member 810 engages power transmission between the worm wheel 300 and the threaded shaft 400, the electric motor 200 drives, via the transmission assembly, the threaded shaft 400 to rotate; the rotating threaded shaft 400 drives the drive nut 500 to move axially along the threaded shaft 400, and the drive nut 500 moving axially along the threaded shaft 400 drives an inner tube 600, which is securely connected to the drive nut 500, to move axially relative to an outer tube 700 and the housing 100, an external end of the inner tube 600 being connected to a to-be-driven object.

In this implementation, the clutch member is operable mainly to transmit power between the worm wheel 300 and the threaded shaft 400. The clutch member 810 is disposed sliding axially along the threaded shaft 400 and rotating synchronously with the threaded shaft 400. By sliding axially along the threaded shaft 400, the clutch member 810 realizes shifting between engagement with and disengagement from the worm wheel 300, thereby implementing engagement/disengagement between the transmission assembly and the threaded shaft 400.

The linear actuator further comprises a release assembly, the release assembly being operable mainly to control the clutch member 810 to shift between an engaged state and a disengaged state, i.e., supplying power for the clutch member 810 to slide. The release assembly comprises a release bar and a shift lever 820 connected to the clutch member 810, the release bar driving the shift lever 820 to slide in an axial direction parallel to the threaded shaft 400. The release bar may be connected to an elastic return member 830, the elastic return member 830 being operable to recover the clutch member from the disengaged state to the engaged state so as to maintain power engagement/disengagement shift between the transmission assembly and the threaded shaft 400 when the linear actuator operates normally.

The clutch member 810 is sleeved on the threaded shaft 400 in a manner of being axially movable along the threaded shaft 400, the clutch member 810 and the threaded shaft 400 maintaining stationary circumferentially. The release assembly further comprises a control cable 840 and the elastic return member 830; the control cable 840 facilitates a user to apply a force to pull the shift lever 820 so as to shift the clutch member 810 to the disengaged state, while the elastic return member 830 may push the clutch member to shift to the engaged state when the force applied to the control cable 840 is released, which ensures normal operability of the energized linear actuator. When the control cable 840 pulls the shift lever 820 to drive the clutch member 810 to shift from the engaged state to the disengaged state, the pull direction of the control cable 840 is consistent with the movement direction of the clutch member 810, which ensures that the pull force of the control cable 840 is directly transmitted to the clutch member 810; this eliminates a plurality of intermediate parts, lowers manufacturing precision requirements, and saves costs. The elastic return member 830 may adopt an elastic member such as a compression spring; after the control cable 840 pulls the clutch member 810 to move, the elastic return member 830 is compressed to accumulate an elastic potential energy; when the force applied on the control cable 840 is released, the elastic return member 830 pushes the shift lever 820 to drive the clutch member 810 to shift from the disengaged state to the engaged state.

The release bar comprises a bar body 850, the shift lever 820 being securely connected to the bar body 850, the elastic return member 830 being arranged between the housing 100 and the bar body 850. Setting of the bar body 850 facilitates transmitting the forces of the elastic return member 830 and the control cable 840 to the shift lever 820, which also prevents deviation of the sliding shift lever 820. A sliding groove or a sliding hole fitted with the bar body 850 may be arranged on the housing 100 to limit a sliding direction of the bar body 850, the sliding direction of the bar body 850 being parallel to the axial direction of the threaded shaft 400. The shift lever 820 may be secured on the bar body 850 in a manner of setting a step on the bar body 850, the shift lever 820 being sleeved on the bar body 850, one end of the shift lever 820 abutting against the step, another end thereof being secured by a snap spring, whereby axial displacement relative to the shift lever 820 is limited in the axial direction of the bar body 850. The friction between the snap ring and said another end of the shift lever 820 and the friction between the step on the bar body 850 and the one end of the shift lever 820 may also limit circumferential rotation of the shift lever 820 around the bar body 850. The shift lever 820 may also be connected to the bar body 850 via interference-fitting.

Since the shift lever 820 needs to slide axially along the threaded shaft 400 so as to control the clutch member 810 to shift between the engaged position and the disengaged position, the release bar further comprises a guiding slider 860 that is securely connected to the bar body 850. A guiding groove is provided on the housing 100, the guiding slider 860 being slidingly fitted with the guiding groove. The guiding slider 860 further enhances sliding stability of the bar body 850, thereby securing the movement direction of the shift lever 820 and facilitating transferring the forces of the elastic return member 830 and the control cable 840 to the shift lever 820. In addition, by slidingly connecting the bar body 850 to the housing 100 such that the movement direction of the bar body 850 is limited via the housing 100, it ensures that the direction of the elastic force produced by the elastic return member 830 against the bar body 850 and the direction of the pull force produced by the control cable 840 against the bar body 850 are both parallel to the axial direction of the threaded shaft 400, which prevents the bar body 850 or shift lever 820 from being stuck during sliding. Alternatively, the control cable may be secured on the guiding slider 860, which facilitates fixation of the control cable. The guiding slider 860 and the bar body 850 may also be fixed in such a manner of sleeving the guiding slider 860 on the bar body 850 while arranging a step on the bar body 850, one end surface of the guiding slider 860 abutting against the step, another end surface of the guiding slider 860 being fixed by a snap spring arranged on the bar body 850.

In a case that the elastic return member 830 is a compression spring, it is usually sleeved at an end portion of the bar body 850. By setting the guiding slider 860 and fixing the control cable on the guiding slider 860, it can avoid interference between the control cable and the elastic return member 830. Of course, the elastic return member 830 may also be a spring plate or the like; if the spring plate is adopted, the spring plate may be secured between the guiding slider 860 and the housing 100, while the control cable is fixed on the bar body 850 or on the guiding slider 860.

The clutch member 810 may be sleeved on the threaded shaft 400 in a manner of being axially movable along the threaded shaft 400, a drive protrusion being provided on one end surface of the clutch member 810, a drive slot being provided on the end surface of the worm wheel 300 facing the clutch member 810; by inserting the drive protrusion in the drive slot, the power on the worm wheel 300 can be transmitted to the clutch member 810 and then transmitted via the clutch member 810 to the threaded shaft 400. Of course, the drive protrusion may be provided on the worm wheel 300, while the drive slot is provided on the clutch member 810.

To allow for the clutch member 810 to efficiently transmit the power of the worm wheel 300 to the threaded shaft 400, a spline 410 extending axially is provided on a circumferential surface of the threaded shaft 400, while a spline groove fitted with the spline 410 is formed on the clutch member 810, the spline 410 being circumferentially uniformly distributed on the outer circumferential surface of the threaded shaft 400. The number of splines 410 may be determined as per drive efficiency. Fitting between the spline 410 and the spline groove may ensure that the clutch member 810 does not move circumferentially relative to the threaded shaft 400 but may move axially along the threaded shaft 400, thereby facilitating engagement/disengagement between the clutch member 810 and the worm wheel 300.

To implement power transmission, it is needed to engage one end surface of the clutch member 810 with the worm wheel 300, while the shift lever 820 needs to drive the clutch member 810 to move axially along the threaded shaft 400; to achieve this, an annular groove 811 is arranged on the outer circumferential surface of the clutch member 810, and a plunger 821 inserted in the annular groove 811 is arranged on the shift lever 820. The number of plungers 821 may be one, two, or three. The plunger 821 inserted in the annular groove 811 does not interfere with rotation of the clutch member 810, which can only push the clutch member 810 to move axially along the threaded shaft 400. However, since the clutch member 810 is rotating in the engaged state, friction occurs between the plunger 821 and a side wall of the annular groove 811; the friction causes certain abrasion to the plunger 821 with certain noise produced. To address this issue, a self-lubricating piece 822 is arranged between the plunger 821 and the inner side wall of the annular groove 811. The self-lubricating piece 822, which is made of a polymer material, can not only reduce the friction with the side wall of the annular groove 811, but can also reduce the noise, thereby improving product quality. The self-lubricating piece 822 may be adhered on the inner side wall of the annular groove 811, or stuck on the plunger 821, or stuck on both of the inner side wall of the annular groove 811 and the plunger 821; the user may freely select a position of setting the self-lubricating piece 822 dependent on actual circumstances.

On the basis of the solution described *supra,* the linear actuator further comprises a damper 110. When the clutch member 810 is in the disengaged state, the threaded shaft 400 loses the self-locking force applied by the worm wheel 300 and the worm, so that the threaded shaft 400 may rotate freely, a consequence of which is that the drive nut 500 would drive the inner tube 600 to descend quickly, potentially incurring a safety accident. The damper 110 as provided produces a damping force against the clutch member 810 when being shifted to the disengaged state, whereby the rotating speed of the threaded shaft 400 is controlled to move the inner tube 600 down slowly, thereby preventing a potential risk.

The damper 110 may be made of an elastic material, e.g., rubber. The clutch member 810 in the disengaged state compresses the damper 110, so that the damper 110 can produce a stable damping force to control the inner tube 600 to move down slowly at a uniform velocity, whereby the to-be-lifted object connected to the inner tube 600 can also move down stably.

The damper 110 may be disposed on the housing 100. The damper 110 abuts against the disengaged clutch member 810 to damp rotation of the latter, thereby preventing excessively fast down movement of the inner tube 600. Of course, in some implementations, the damper 110 is disposed on the housing 100 opposite the end surface of the clutch member 810, which can increase the contact area between the damper 110 and the clutch member 810 to thereby provide sufficient damping force, allowing for slow and stable down movement of the inner tube 600. Alternative to disposing the damper 110 on the housing 100, the damper 110 may also be secured on the clutch member 810, so that the clutch member 810 in the disengaged state moves axially along the threaded shaft 400, which can also compress the housing 100 opposite thereto, whereby a damping force is produced. Of course, the damper 110 may also comprise a first damping piece and a second damping piece which produce a damping force due to mutual friction therebetween, the two damping pieces being secured on the clutch member 810 and the housing 100, respectively. When the clutch member 810 is in the disengaged state, a damping force is generated by mutual friction between the first damping piece on the clutch member 810 and the second damping piece correspondingly positioned on the housing 100.

Furthermore, in order to limit the movement travel of the bar body 850 and prevent a circumstance in which the damper 110 fails to be compressed by the clutch member 810 and the housing 100 when the bar body 850 has moved to the maximum travel so that a damping force cannot be produced, a limiter 880 is further provided for the release assembly, the limiter 880 being configured mainly to limit a release travel of the release bar, within which release travel the damper 110 produces a damping force against the clutch member so as to ensure slow and stable retraction of the linear actuator. The limiter 880 may be mounted at an end portion of the bar body 850 or mounted on the guiding slider 860. In this implementation, the limiter 880 is mounted at an end portion of the guiding slider 860. The damper 110 offers a damping force against the clutch member 810 within the release travel of the release bar; for example, when the damper 110 is compressed to the extremity but the release bar has not reached the allowed maximum movement distance yet, the damper 110 would limit the travel; now, even if the user applies a greater force, the damping force produced by the damper 110 will be still constant, allowing for the threaded shaft 400 to rotate at a uniform speed, thereby realizing retraction of the linear actuator at a uniform speed; on the other hand, in a circumstance that the damper 110 has produced a damping force before being compressed to the extremity while the release travel of the release bar has reached the extremity yet, so that the limiter 880 has come to abut against the housing or another part, even a greater force further applied by the user to pull the control cable 840 cannot not move the release bar, and the compression force subjected to the damper 110 also becomes constant, resulting in rotation of the threaded shaft at a uniform speed, thereby implementing retraction of the linear actuator at a uniform speed. With this limitation, so long as the user pulls the control cable 840 to the extremity, a uniform retraction speed of the linear actuator can be always ensured, without a need to specifically control the force applied to pull the control cable 840.

Based on the solution described *supra,* a blocker 870 is arranged between the housing 100 and the limiter 880 on the movement trajectory of the release bar. The blocker 870 may limit the movement travel of the bar body 850; when the clutch member 810 is shifted from the engaged state to the disengaged state, the limiter 880 would come to abut against the blocker 870 after the control cable 840 pulls the bar body 850 to move a certain distance, whereby the movement travel of the bar body 850 is limited, which also prevents collision between the clutch member 810, which continues sliding by an excessively long travel after being disengaged from the worm wheel 300, and another component, thereby preventing occurrence of damages. In addition, in a case that the elastic return member 830 adopts a compression spring, the blocker 870 may also serve to position the elastic return member 830, one end of the compression spring being sleeved on the blocker 870, another end thereof being sleeved on the limiter 880, whereby the ends of the compression spring are limited.

As illustrated in Fig. 1, during normal operation, the elastic return member 830 generates an elastic force against the bar body 850 in a direction parallel to the threaded shaft 400 towards the worm wheel 300, so that the bar body 850 can push the clutch member 810 to fit with the worm wheel 300, whereby the electric motor 200 can transmit the power to the threaded shaft 400 via the transmission assembly and the clutch member 810; the rotating threaded shaft 400 drives the drive nut 500 to move axially along the threaded shaft 400 so as to raise or lower the to-be-driven object connected on the inner tube 600.

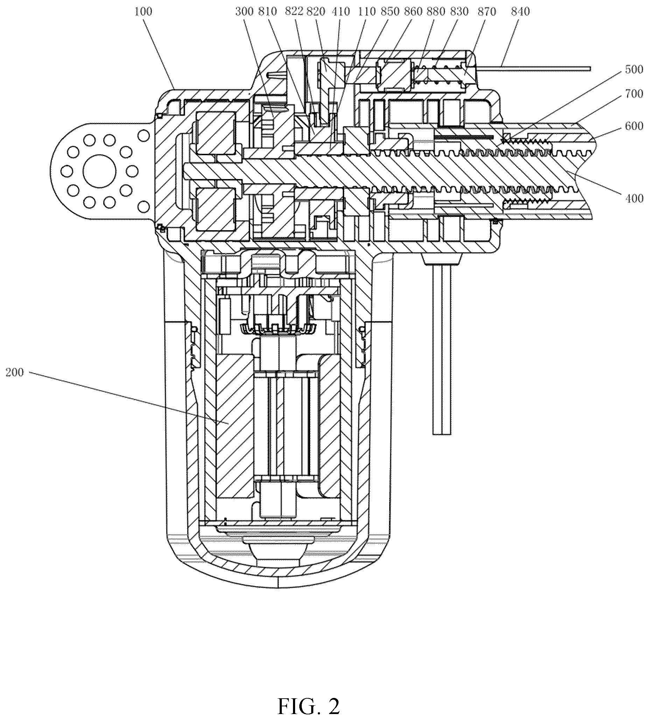

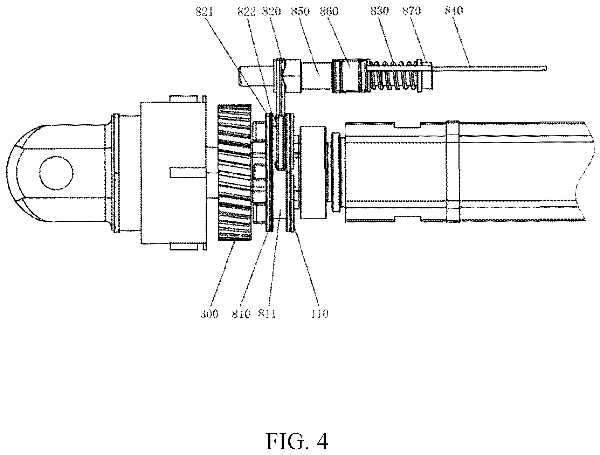

As illustrated in Figs. 2 and 4, when an incident such as power outage occurs, the inner tube 600 may be retracted into the outer tube 700 by pulling the control cable 840. The control cable 840 drives, via the guiding slider 860, the bar body 850 to slide in a direction parallel to the axis of the threaded shaft 400; meanwhile, the shift lever 820 connected on the bar body 850 drives the clutch member 810 to move axially along the threaded shaft 400, the movement direction of the clutch member 810 being consistent with the pull direction of the control cable 840, whereby the clutch member 810 is disengaged from the worm wheel 300; now, the threaded shaft 400 loses the self-locking force applied by the worm wheel 300 and the worm, so that the threaded shaft 400 can rotate freely, and the inner tube 600 subjected to a pressure from the to-be-driven object is retracted into the outer tube 700, thereby realizing quick release of the linear actuator. In this case, the drive nut 500 drives the threaded shaft 400 to move axially, actuating the threaded shaft 400 to rotate; however, the damping force produced by the damper 110 on the housing 100 against the clutch member 810 would limit the rotating speed of the threaded shaft 400, thereby controlling down movement speed of the drive nut 500, which ensures that the inner tube 600 can be slowly and stably retracted into the outer tube 700 when the linear actuator quickly cuts off the torque transfer between the transmission assembly and the threaded shaft. When the pull force applied to the control cable 840 is released, the elastic force of the elastic return member 830 would drive the clutch member 810 to resume the engaged state, i.e., the clutch member 810 is engaged with the worm wheel 300. Fitting between the clutch member 810 and the release assembly realizes engagement and disengagement between the transmission assembly and the threaded shaft 400, which only relies on a simple structure and thereby lowers precision requirements on the components of the clutch member; in addition, by directly pulling the clutch member 810 via the control cable 840 with the pulling direction of the control cable 840 being consistent with the movement direction of the clutch member 810, the precision requirements on the transmission components between the control cable 840 and the clutch member 810 are also lowered, thereby simplifying the overall structure of the clutch member with improved reliability.

## Claims

1. A quick-releasing linear actuator, comprising:
a housing (100), an electric motor (200);
a transmission assembly operable to transmit a motor torque;
a threaded shaft (400) driven by the motor torque to rotate;
and a drive nut (500) thread-fitted on the threaded shaft (400) and driven by rotation of the threaded shaft (400) to move axially along the threaded shaft (400);
wherein the linear actuator further comprises:
a clutch member (810) disposed on the threaded shaft (400) between the transmission assembly and the drive nut (500), the clutch member (810) rotating synchronously with the threaded shaft (400) and sliding axially along the threaded shaft (400);
and a release assembly comprising a release bar and a shift lever (820), the release bar driving the shift lever (820) to be displaced axially along the threaded shaft (400) in a linear, reciprocal manner, the clutch member (810) being driven by linear, reciprocal displacement of the shift lever (820) so as to be engaged with or disengaged from the transmission assembly,
**characterized in that**
the linear actuator further comprises a damper (110) that produces a damping force against the clutch member (810) when the clutch member (810) is disengaged from the transmission assembly; the damper (110) being disposed in the housing (100).

2. The quick-releasing linear actuator according to claim 1, wherein the damper (110) is elastically deformable under compression.

3. The quick-releasing linear actuator according to claim 1, wherein the damper (110) is disposed on the housing (100), the damper (110) engaging the clutch member (810) to produce a rotation damping force; or, the damper (110) is disposed on the clutch member (810), the damper (110) engaging the housing (100) to produce a rotation damping force; or, the damper (110) comprises a first damping piece disposed on the clutch member (810) and a second damping piece disposed on the housing (100), the first damping piece engaging the second damping piece to produce a rotation damping force.

4. The quick-releasing linear actuator according to claim 1, wherein the release assembly further comprises a limiter (880) configured to limit a release travel of the release bar, the damper (110) producing the damping force against the clutch member (810) within the release travel of the release bar.

5. The quick-releasing linear actuator according to claim 4, wherein the release bar comprises a bar body (850) and a guiding slider (860) attached on the bar body (850), and a guiding groove is provided on the housing (100), the guiding slider (860) being slidingly fitted in the guiding groove, the limiter (880) stopping the bar body (850) or the guiding slider (860) to thereby limit the release travel of the release bar.

6. The quick-releasing linear actuator according to claim 1, wherein the clutch member (810) and the threaded shaft (400) are connected via a spline (410).

7. The quick-releasing linear actuator according to claim 1, wherein an annular groove (811) extending circumferentially is arranged on a circumferential wall of the clutch member (810)
, the shift lever (820) projecting in the annular groove (811), the clutch member (810) rotating about an axis of the threaded shaft (400) relative to the shift lever (820).

8. The quick-releasing linear actuator according to claim 7, wherein a self-lubricating piece (822) is arranged between an inner sidewall of the annular groove (811) and an end portion of the shift lever (820).

9. The quick-releasing linear actuator according to claim 1, wherein the transmission assembly comprises a worm wheel (300) and a worm meshing with each other for transmission, one of the clutch member (810) and the worm wheel (300) being provided with a drive protrusion, the other one being provided with a drive slot, the linear, reciprocal displacement of the shift lever (820) driving the drive protrusion to enter or exit the drive slot to induce engagement or disengagement.

## Patentansprüche

1. Linearstellglied mit Schnelllösefunktion, umfassend:
ein Gehäuse (100), einen Elektromotor (200);
eine Übertragungsanordnung, die zum Übertragen eines Motordrehmoments betätigbar ist;
eine Gewindewelle (400), die durch das Motordrehmoment drehend angetrieben wird;
und eine Antriebsmutter (500), die auf die Gewindewelle (400) aufgeschraubt ist und durch Drehung der Gewindewelle (400) angetrieben wird, sich axial entlang der Gewindewelle (400) zu bewegen;
wobei das Linearstellglied ferner umfasst:
ein Kupplungselement (810), das auf der Gewindewelle (400) zwischen der Übertragungsanordnung und der Antriebsmutter (500) angeordnet ist, wobei sich das Kupplungselement (810) synchron mit der Gewindewelle (400) dreht und axial entlang der Gewindewelle (400) gleitet;
und eine Löseanordnung, umfassend eine Lösestange und einen Schalthebel (820), wobei die Lösestange den Schalthebel (820) antreibt, axial entlang der Gewindewelle (400) in einer linearen, hin- und hergehenden Weise verlagert zu werden, wobei das Kupplungselement (810) durch eine lineare, hin- und hergehende Verlagerung des Schalthebels (820) angetrieben wird, um mit der Übertragungsanordnung in Eingriff gebracht oder von dieser außer Eingriff gebracht zu werden,
**dadurch gekennzeichnet, dass**
das Linearstellglied ferner einen Dämpfer (110) umfasst, der eine Dämpfungskraft gegen das Kupplungselement (810) erzeugt, wenn das Kupplungselement (810) von der Übertragungsanordnung außer Eingriff gebracht ist; wobei der Dämpfer (110) in dem Gehäuse (100) angeordnet ist.

2. Linearstellglied mit Schnelllösefunktion nach Anspruch 1, wobei der Dämpfer (110) unter Kompression elastisch verformbar ist.

3. Linearstellglied mit Schnelllösefunktion nach Anspruch 1, wobei der Dämpfer (110) an dem Gehäuse (100) angeordnet ist, wobei der Dämpfer (110) mit dem Kupplungselement (810) in Eingriff steht, um eine Rotationsdämpfungskraft zu erzeugen; oder der Dämpfer (110) an dem Kupplungselement (810) angeordnet ist, wobei der Dämpfer (110) mit dem Gehäuse (100) in Eingriff steht, um eine Rotationsdämpfungskraft zu erzeugen; oder der Dämpfer (110) ein erstes Dämpfungselement, das an dem Kupplungselement (810) angeordnet ist, und ein zweites Dämpfungselement umfasst, das an dem Gehäuse (100) angeordnet ist, wobei das erste Dämpfungselement mit dem zweiten Dämpfungselement in Eingriff steht, um eine Rotationsdämpfungskraft zu erzeugen.

4. Linearstellglied mit Schnelllösefunktion nach Anspruch 1, wobei die Löseanordnung ferner ein Begrenzungselement (880) umfasst, das dazu eingerichtet ist, einen Löseweg der Lösestange zu begrenzen, wobei der Dämpfer (110) innerhalb des Lösewegs der Lösestange die Dämpfungskraft gegen das Kupplungselement (810) erzeugt.

5. Linearstellglied mit Schnelllösefunktion nach Anspruch 4, wobei die Lösestange einen Stangenkörper (850) und einen an dem Stangenkörper (850) angebrachten Führungsschieber (860) umfasst und eine Führungsnut an dem Gehäuse (100) vorgesehen ist, wobei der Führungsschieber (860) gleitend in die Führungsnut eingepasst ist, wobei das Begrenzungselement (880) den Stangenkörper (850) oder den Führungsschieber (860) stoppt, um dadurch den Löseweg der Lösestange zu begrenzen.

6. Linearstellglied mit Schnelllösefunktion nach Anspruch 1, wobei das Kupplungselement (810) und die Gewindewelle (400) über eine Keilverzahnung (410) verbunden sind.

7. Linearstellglied mit Schnelllösefunktion nach Anspruch 1, wobei eine sich in Umfangsrichtung erstreckende Ringnut (811) an einer Umfangswand des Kupplungselements (810) angeordnet ist, wobei der Schalthebel (820) in die Ringnut (811) hineinragt und sich das Kupplungselement (810) relativ zu dem Schalthebel (820) um eine Achse der Gewindewelle (400) dreht.

8. Linearstellglied mit Schnelllösefunktion nach Anspruch 7, wobei ein selbstschmierendes Element (822) zwischen einer inneren Seitenwand der Ringnut (811) und einem Endabschnitt des Schalthebels (820) angeordnet ist.

9. Linearstellglied mit Schnelllösefunktion nach Anspruch 1, wobei die Übertragungsanordnung ein Schneckenrad (300) und eine Schnecke umfasst, die zur Übertragung miteinander kämmen, wobei eines von dem Kupplungselement (810) und dem Schneckenrad (300) mit einem Antriebsvorsprung versehen ist und das andere mit einem Antriebsschlitz versehen ist, wobei die lineare, hin- und hergehende Verlagerung des Schalthebels (820) den Antriebsvorsprung antreibt, in den Antriebsschlitz einzutreten oder aus diesem auszutreten, um ein Einrücken oder Ausrücken zu bewirken.

## Revendications

1. Actionneur linéaire à déverrouillage rapide, comprenant :
un boîtier (100), un moteur électrique (200) :
un ensemble de transmission apte à transmettre un couple moteur ;
un arbre fileté (400) entraîné en rotation par le couple moteur ;
et un écrou d'entraînement (500) monté par filetage sur l'arbre fileté (400) et entraîné par la rotation de l'arbre fileté (400) de manière à se déplacer axialement le long de l'arbre fileté (400) ;
dans lequel l'actionneur linéaire comprend en outre :
un élément d'embrayage (810) disposé sur l'arbre fileté (400) entre l'ensemble de transmission et l'écrou d'entraînement (500), l'élément d'embrayage (810) tournant de manière synchrone avec l'arbre fileté (400) et coulissant axialement le long de l'arbre fileté (400) ;
et un ensemble de déverrouillage comprenant une barre de déverrouillage et un levier de manœuvre (820), la barre de déverrouillage entraînant le levier de manœuvre (820) de manière que celui-ci soit déplacé axialement le long de l'arbre fileté (400) de façon linéaire et alternative, l'élément d'embrayage (810) étant entraîné par un déplacement linéaire et alternatif du levier de manœuvre (820) de manière à être mis en prise avec l'ensemble de transmission ou mis hors prise de celui-ci, **caractérisé en ce que** l'actionneur linéaire comprend en outre un amortisseur (110) qui produit une force d'amortissement sur l'élément d'embrayage (810) lorsque l'élément d'embrayage (810) est mis hors prise de l'ensemble de transmission ; l'amortisseur (110) étant disposé dans le boîtier (100).

2. Actionneur linéaire à déverrouillage rapide selon la revendication 1, dans lequel l'amortisseur (110) est élastiquement déformable sous l'effet d'une compression.

3. Actionneur linéaire à déverrouillage rapide selon la revendication 1, dans lequel l'amortisseur (110) est disposé sur le boîtier (100), l'amortisseur (110) venant en prise avec l'élément d'embrayage (810) pour produire une force d'amortissement en rotation ; ou l'amortisseur (110) est disposé sur l'élément d'embrayage (810), l'amortisseur (110) venant en prise avec le boîtier (100) pour produire une force d'amortissement en rotation ; ou l'amortisseur (110) comprend une première pièce d'amortissement disposée sur l'élément d'embrayage (810) et une seconde pièce d'amortissement disposée sur le boîtier (100), la première pièce d'amortissement venant en prise avec la seconde pièce d'amortissement pour produire une force d'amortissement en rotation.

4. Actionneur linéaire à déverrouillage rapide selon la revendication 1, dans lequel l'ensemble de déverrouillage comprend en outre un limiteur (880) configuré pour limiter une course de déverrouillage de la barre de déverrouillage, l'amortisseur (110) produisant la force d'amortissement sur l'élément d'embrayage (810) dans les limites de la course de déverrouillage de la barre de déverrouillage.

5. Actionneur linéaire à déverrouillage rapide selon la revendication 4, dans lequel la barre de déverrouillage comprend un corps de barre (850) et un coulisseau de guidage (860) fixé sur le corps de barre (850), et une rainure de guidage est prévue sur le boîtier (100), le coulisseau de guidage (860) étant monté coulissant dans la rainure de guidage, le limiteur (880) arrêtant le corps de barre (850) ou le coulisseau de guidage (860) pour limiter ainsi la course de déverrouillage de la barre de déverrouillage.

6. Actionneur linéaire à déverrouillage rapide selon la revendication 1, dans lequel l'élément d'embrayage (810) et l'arbre fileté (400) sont reliés par l'intermédiaire d'une cannelure (410).

7. Actionneur linéaire à déverrouillage rapide selon la revendication 1, dans lequel une gorge annulaire (811) s'étendant circonférentiellement est agencée sur une paroi circonférentielle de l'élément d'embrayage (810), le levier de manœuvre (820) faisant saillie dans la gorge annulaire (811), l'élément d'embrayage (810) tournant autour d'un axe de l'arbre fileté (400) par rapport au levier de manœuvre (820).

8. Actionneur linéaire à déverrouillage rapide selon la revendication 7, dans lequel une pièce autolubrifiante (822) est agencée entre une paroi latérale intérieure de la gorge annulaire (811) et une partie d'extrémité du levier de manœuvre (820).

9. Actionneur linéaire à déverrouillage rapide selon la revendication 1, dans lequel l'ensemble de transmission comprend une roue à vis sans fin (300) et une vis sans fin engrenant l'une avec l'autre en vue de la transmission, l'un parmi l'élément d'embrayage (810) et la roue à vis sans fin (300) étant pourvu d'une saillie d'entraînement, l'autre étant pourvu d'une fente d'entraînement, le déplacement linéaire et alternatif du levier de manœuvre (820) amenant la saillie d'entraînement à entrer dans la fente d'entraînement ou à en sortir pour provoquer la mise en prise ou la mise hors prise.
